# EUROPEAN PATENT SPECIFICATION

(11) **EP 2 828 623 B1**
(45) Date of publication and mention of the grant of the patent: **17.11.2021**
(21) Application number: 13720534.0
(22) Date of filing: 22.03.2013
(51) Int. Cl.: F24F 6/04, H01H 29/04, F24F 6/00, F24F 140/30, G01F 1/64, F24F 5/00, G05D 7/06

(54) **ECONOMIZER FOR ADIABATIC COOLING SYSTEMS**
VORWÄRMER FÜR ADIABATISCHE KÜHLANLAGEN
ÉCONOMISEUR POUR SYSTÈMES DE REFROIDISSEMENT ADIABATIQUE

(30) Priority: 23.03.2012 IT MI20120464
(43) Date of publication of application: 28.01.2015
(73) Proprietor: Eurochiller S.r.l., 27030 Castello d'Agogna (PV) (IT)
(72) Inventor: BARBE, Cesare, I-27030 Castello d'Agogna (PV) (IT)
(74) Representative: Riccardi, Sergio
(86) International application number: PCT/IB2013/000462
(87) International publication number: WO 2013/140233

(56) References cited:
- EP-A1- 0 509 288
- EP-A1- 0 733 884
- EP-A1- 0 795 268
- GB-A- 650 199
- JP-A- 2000 300 099
- US-A- 4 986 782
- US-A- 4 994 211
- US-A- 5 192 464
- None

## Description

The present invention relates to a device for detecting the presence of a flow of liquids and a cooling system comprising said device. More particularly, the device of the present invention carries out the function of economizer when installed in adiabatic cooling systems, thus it will be explained hereinafter, how said device carries out this function of economizer.

It is well known that cooling of a fluid or solid substance may be performed by the adiabatic effect, namely removal of the amount of thermal energy required for the evaporation of a desired mass of liquid in contact with said fluid or solid. This thermal energy, also called latent heat, develops without any change of temperature of the evaporating liquid; conversely the fluid or solid to be cooled undergoes a temperature fall, since it has to yield a quantity of heat equal to that required for evaporation of the liquid contacted therewith. This principle is widely exploited in the cooling systems by means of refrigerating or evaporating equipments. The cooling capacity of these systems is proportional to the quantity of evaporated liquid. It is to be noted that the amount of evaporated liquid is generally lower than the quantity of liquid entering the evaporation equipment. The deviation of evaporated liquid quantity relative to the quantity of entering liquid, depends on the intrinsic efficiency of the evaporative equipment and the quality of the regulation system. The liquid most commonly used in the evaporation equipments is water, whose latent heat for conversion from liquid to steam and viceversa, is approximately 700 W/kg.

One of the main technical problems for refrigerating or cooling equipments exploiting the adiabatic effect, is therefore to be ascribed to the consumption of the thermal carrier, namely water, and this problem may hardly be solved only by implementing sophisticated logics in the regulation system of the water flow rate.

Indeed in order that a regulation logic whatsoever may have an impact on the efficiency of the equipment, it is necessary that the logic receives as an input, the real quantity of non-evaporated water, namely water not taking part in the thermal exchange with the fluid to be cooled. The knowledge of this data, in real time and with high accuracy, allows the immediate interruption of water feed flow, when the humidity level of the equipment exceeds a predetermined threshold.

The cooling systems of this kind are usually provided with humidity detection probes, which are activated by the detection of liquid, namely water, on them. In a cooling system there are as many humidity probes as bigger is the system, clearly to make the detection of the presence of excess humidity in the system as most precise as possible. These probes are often subject to wrong surveys, because they can be activated even by the presence just of one single drop, which is however not representative of the general status of the system. Moreover these probes require a long time to become dry and again operative, thus clearly causing considerable operative defects of the system. Other systems are however so structured, as to have a vertical axis inclined to ground, to be used in internal or external environments, but this kind of systems will not be discussed in this context because, as it will be apparent hereinafter, the device according to the present invention is particularly functional for systems positioned parallel to the ground and this is an essential characteristic of the device of the present invention.

JP 2000 300099 discloses a control device for air conditioner to solve the problem that the temperature of the electrical equipment of an outdoor unit exceeds an allowable temperature even in the condition in which an operating current (I) is low due to the small number of revolution (r) of an outdoor blower at the time of reheat dehumidifying operation so as to cause inconvenience to the electrical equipment of the outdoor unit in a conventional air conditioner. However this document does not disclose a device for detecting passage of a liquid having electrically conducting elements being positioned at a reciprocal distance in the range of 5 mm to 15 mm determined by the thickness of the narrowing portion to detect at least the presence of a minimum level of detectable water flowing through the device.

EP 0 733 884 discloses a quantity meter and an implement for milking animals, said implement being provided with such a meter.

EP 0 509 288 discloses a method and apparatus for measuring a value corresponding to the mass of a milk plug as well as the milk flow.

EP 0 795 268 discloses a quantity meter and an implement for milking animals comprising such a meter.

US 5 192 464 discloses an evaporative cooler.

US 4 994 211 discloses a water distribution apparatus for evaporative cooling system.

The detection device of the present invention is advantageously used and here described as economizer of water consumption in evaporation equipments with water drain. The invention consists of a dielectric device, for instance made as a dielectric block comprising a pair of coaxial continuity sensors, aligned in a vertical discharge duct. The device comprises also a pair of electric terminals, to be connected to the regulation system of the evaporation equipment, for each sensor. In absence of water or humidity the dielectric material of the device generates an electric resistance between the two sensors tending to infinity, while the presence of water on the passage surface between the sensors, generates an electric resistance varying from a minimum to a maximum as a function of the intensity of discharge. The logic of the regulation system of the evaporation equipment depends on the value of the electric resistance generated between the two sensors. A low value of electric resistance between the sensors tendentially causes a slackening of water irrigation in the evaporation equipment. The amount of water used in the evaporation equipments may also vary according to the required thermal power and the thermal-hygrometric conditions of the environment where the evaporation process takes place. As an evaporation equipment may include a system for feeding water to be evaporated such as a duct, a nozzle, a container with holes or nozzles, a bored pipe, or one or more atomising nozzles, with or without air or water pressurizing devices, and an element on which water deposits temporarily during evaporation, it is known that said temporary deposit tends to fall downwards by gravity. Besides the need to restore the level of the temporary deposit of water under evaporation, the consequences of an uncontrolled mass transfer consist of a greater water consumption due to the missed evaporation of water entering any drain, the need to provide for an availability of water equal or higher that the excess water consumption, and risk of mechanical entrainment of excess water in equipment with forced air circulation, with the consequent possibility of backwater, where noxious or lethal bacterial substances may arise and proliferate.

More particularly, the device of the present invention is adapted to be used in systems arranged in the external environment, without water storage. In a very advantageous way the present invention exploits the natural property of the drops of condensed water to slide downwards by gravity. The device according to the present invention is a detector of presence of a water flow (even if such a flow is very reduced but, according to standards set by the manufacturer, sufficient to establish that the system is saturated and feed of water to the system is no more required, before it has consumed the already supplied water quantity), so that when the device is activated and a signal of water presence is received, the device sends a signal of stopping water delivery to the system. The system sensitivity even to very reduced water quantities, is indeed due to the fact that both the system and the device are arranged parallel to ground and more particularly the device axis X is perpendicular to ground, and the system is provided with a drain trough inclined downward to the central part of the system, where the economizer device is arranged. In this way, irrespective of the length of the drain trough, the excess water, condensing when falling in the trough in the form of drops, will be wholly conveyed to the detection device in view of the inclination of the trough toward the device. The drops will then be conveyed by gravity falling into the main body of the device. Said main body is electrically non conductive and has a passage channel converging to a taper. At both sides of said taper two conductive elements are inserted, both having the same diameter of the round taper. The first conductive element has a first conical portion aiming upwards, conveying the water drops to the second cylindrical portion of the element, causing the drops to converge together. The drop(s) conveyed by the element (assuming that there is a presence of drops at a given operative moment) slide by gravity downwards until they reach the second conductive element. Said second conductive element has the same shape of the first conductive element and is arranged in the flow detection device at a position which is the mirror image of the first conductive element. At two opposite sides of the device there are two through holes matching as many through holes made in the conductive elements. In said holes two electrodes are inserted, which are totally buried in the main body of the device, and are not electrically connected one another. In a particularly advantageous way, the holes in which the electrodes are inserted, are made on two axes at different height to the vertical, and this feature, since the device is intended for being used outdoors, allows to strongly reduce the probability that rain drops rebound and may accidentally hit both electrodes thus generating a false signal. In view of this configuration the electrodes may be activated and therefore contacted electrically only by a water flow passing through the device body, thus generating a connection between the two conductive elements arranged in the main body of the device. Therefore if some drops are forming a sort of streamlet or flow sufficient to overcome the taper of non conductive material and to reach the second conductive element, thus generating an even small water flow between the two conductive elements, then the device sends a signal of excess water in the system.

It has to be particularly noted that the device according to the present invention does not measure a water quantity, but alerts advantageously the system of the presence of a water flow, activating the device which will emit the signal of stopping the water delivery to the system. It is clear that a system provided with the device of the present invention, detecting the presence of excess water on the whole system and only on certain points thereof, gives a very reliable and sensitive information on the system status.

Therefore it is clear that a system provided with the device of the present invention does no longer require humidity sensors and may be alerted for instance by the device of the present invention, that will be connected to a detection system operating in a dedicated mode, as described in another patent application filed concurrently herewith. This will allow a limitation of costs both avoiding waste of water and eliminating humidity sensors which are oft not reliable as above mentioned. The advantageous method of using the economizer device of the present invention is also being disclosed in the above mentioned other patent application filed concurrently herewith.

The main object of the present invention then is to provide a device for detecting the presence of a flow of the residual liquid phase of a fluid, more particularly water, that can also communicate the effected survey to a regulation system, more particularly an electronic regulation system.

Another object of the present invention is to provide a device for detecting the passage of a fluid through the device, thus avoiding that the presence of a liquid flow, or a liquid storage, can be detected only when reaching a determined level, so as to allow a timely detection of excess water and preventing its storage.

A further object of the present invention is to provide a device that can be placed outdoors, still maintaining precise and reliable performances independently from the environmental conditions.

Still another object of the present invention is to make a device adapted to be used with vertical drains and exploiting the natural property of the liquid drops of observing the force of gravity.

Still another object of the present invention is to provide a device adapted to supply a reliable indication of the presence of excess water (or other suitable liquid) in cooling equipments of reduced size as well as in large scale plants.

A further object of the present invention is to provide a device for detecting the passage of a liquid which is little subject to deposit of impurities inevitably contained in the fluid to be checked.

Finally a further object of the present device is to optimize the costs of production and operation of a fluid cooling system.

These and other advantages of the detection device of the present invention will be obtained by the device of the present invention, disclosing a device for detecting the passage of a flow of a liquid, more particularly water in the embodiment herein described, and said advantages will become clear upon reading the following detailed description of a preferred embodiment, to be considered making reference to the annexed sheets of accompanying drawings, in which:
Fig. 1 is a longitudinal sectional view of the preferred embodiment of the device for detecting the passage of a fluid, according to the present invention;
Fig. 1a is a view of the preferred embodiment of a pair of components of the detection device of Fig. 1;
Fig. 2 is a sectional view of the device of Fig. 1 comprising the components of Fig. 1a and installed on an equipment;
Fig. 3 is a sectional view of the device of Fig. 1 in one of its operative phases;
Fig. 4 is a realistic view of the device 50 in one preferred embodiment;
Fig. 5 is a diagram of a plant using the device of the preceding figures;
Fig. 6 is a sectional view of a real plant operating in a mode comparable to that illustrated in Fig. 5 and using the device of Figs. 1-4; and
Fig. 7 is a diagram of a second plant using the device of Figs. 1-4.

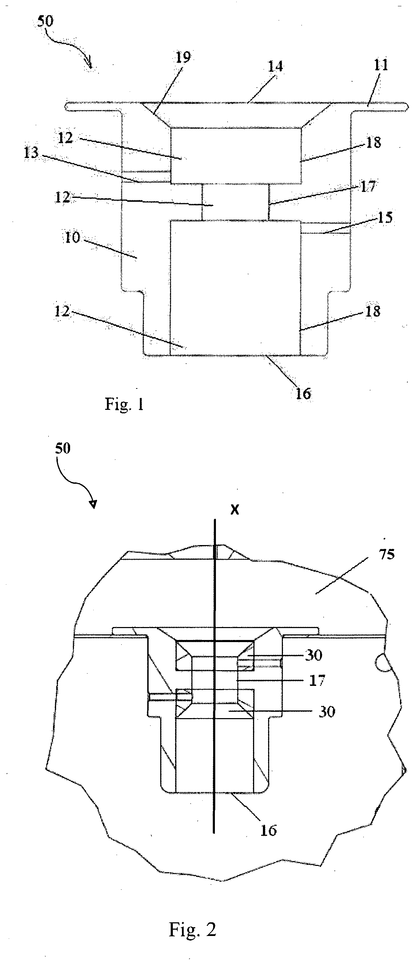

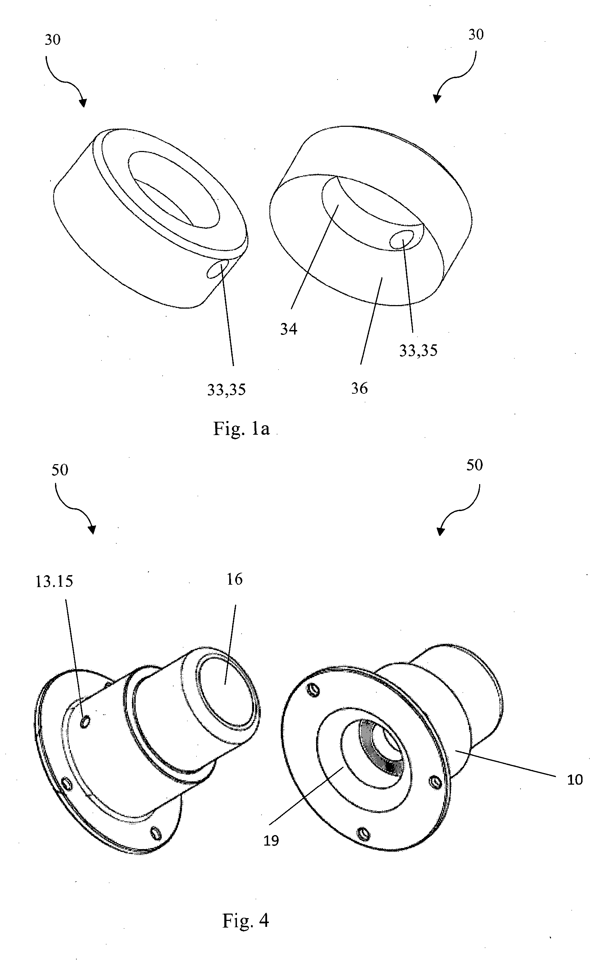

With reference now to Fig. 1, the device 50 for detecting the liquid phase of fluids, is shown in a longitudinal section and has an axially symmetric main body 10 made of dielectric or electrically non conductive material. Along the longitudinal axis of body 10 there is a passage channel 12 having an inlet portion 14 and an outlet portion 16. More particularly the inlet or mouth portion 14 has a flange 11 with a diameter larger than the outer diameter of body 10, thus having a function of assembling relative to an equipment on which it is installed. The inlet portion 14 has a first taper 19 at whose end the passage channel 12 continues with a constant diameter defining a cylindrical wall 18. At the end of said wall 18 in an approximately central position relative to the longitudinal dimension of body 10, there is a projection defining a second cylindrical wall 17, also referred to as narrowing 17, having a smaller diameter relative to the upper wall 18. At last, the passage channel 12 resumes its development defining again the cylindrical wall 18. In opposite positions relative to the narrowing projection 17 but also opposite relative to the diameter of wall 18, there are two channels or through holes 13, 15 between wall 18 and the outer surface of body 10.

With reference to Fig. 1a, one can see two elements 30 made of an electrically conductive material such as stainless steel, constituted by a cylindrical body provided with a passage channel 32 comprising a cylindrical portion 34 with constant diameter and a conical portion 36 with a diameter increasing starting from the cylindrical portion 34. In a direction orthogonal to said portion 34, i.e. radially, there is a through hole 33, 35 connecting passage channel 32 with the outer surface 37 of element 30. More particularly, diameter and position of hole 33, 35 are chosen so as to allow their alignment with holes 13, 15, respectively.

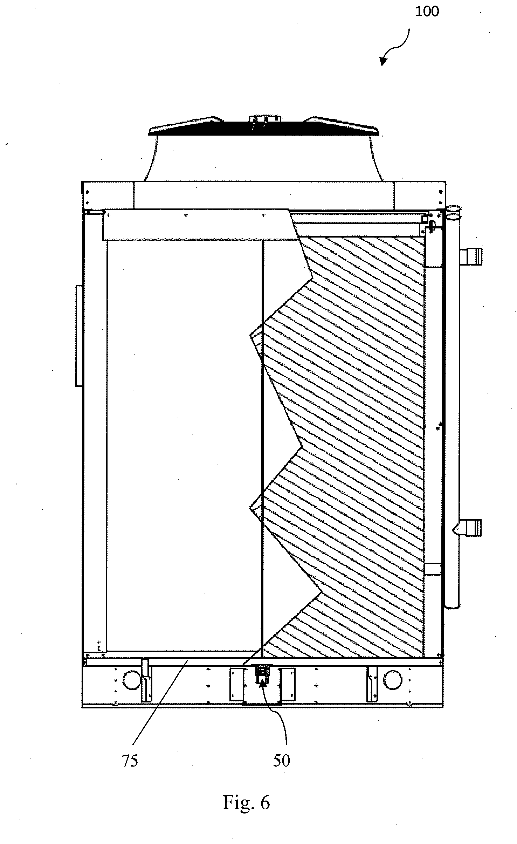

With reference now to Fig. 2, where the two conductive elements 30 are inserted into the device, which is in turn inserted in the illustrative cooling plant 100 diagrammatically shown in Fig. 6, at the center of its trough 4 for collecting the non evaporated water, one can see that the diameter of surface 37 allows a fit, preferably an interference fit, with the cylindrical surfaces 18 of the passage channel 12 of the main body 10. In this way assembly of the device 50 is possible, wherein the conductive elements 30 are inserted in the channel 12 with the relevant holes 33, 35 aligned with holes 13, 15 and the conical portions or tapers 19 and 36 in reciprocal continuation. In this connection it is to be noted that the slopes of the conical portions 19 and 36 relative to the longitudinal axis of device 50 are different, more particularly the slope of portion 36 is slightly greater than the slope of portion 19, so as to enhance the liquid flow, as it will be better explained hereinafter. At last two electrodes 42, 44 are inserted along the holes 13, 33 and 15, 35, respectively, so as to ensure the electrical continuity between each conductive element 30 and each electric wire 41, 43 connected at the opposite end of electrodes 42, 44. Moreover it is to be noted that the thickness of narrowing 17 separating the two electrical elements 30, may vary between 5mm and 15mm. This dimension resulted to be the most proper for the desired operation of the device according to the present invention.

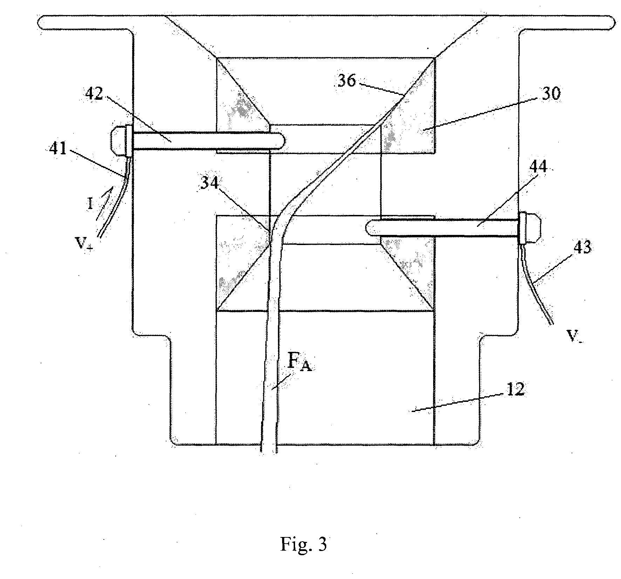

As shown in Fig. 3, a water flow F_{A} runs to the mouth portion 14 of the vertically installed device 50 and descends by gravity along the conical portion 19; the conical portion 36 of the conductive element 30 then causes an acceleration allowing the flow F_{A} to contact a portion 34 of the lower conductive element 30 so as to create the electric continuity and consequent circulation of a current I between the two conductive elements 30 and then between the wires 41, 43 which are subject to a voltage ΔV = V₊ - V₋. The measurement of a not null current I then corresponds, in the regulation logic, to a water storage, namely to a condition of total saturation of the evaporation panel 74: therefore to the current signal I a control signal for the regulation device 72 is associated.

It is clear that the dimensional choice for the device 50 of the present invention, such as diameter of the passage channel 12, size of the projection 17 as well all the other constructional parameters, may be made according to specific objects of sensitivity requested for the device, for instance in terms of minimum level of detectable water storage.

The device according to the present invention is shown in Fig. 4 in one preferred embodiment, in which the body 10 is made for instance as an enbloc moulded item. Anyway it is also possible to make the body 10 of device, divided in two or more pieces that are then assembled.

The device of the present invention is particularly adapted to be incorporated into cooling equipments using evaporation plants because the device, in view of its feature of detecting the presence of non-evaporated water, constitutes a reliable and efficient retroaction of the regulation system for the feeding rate of the equipment.

Some applications are summarized hereinafter, where the device of the present invention is used in the above described mode.

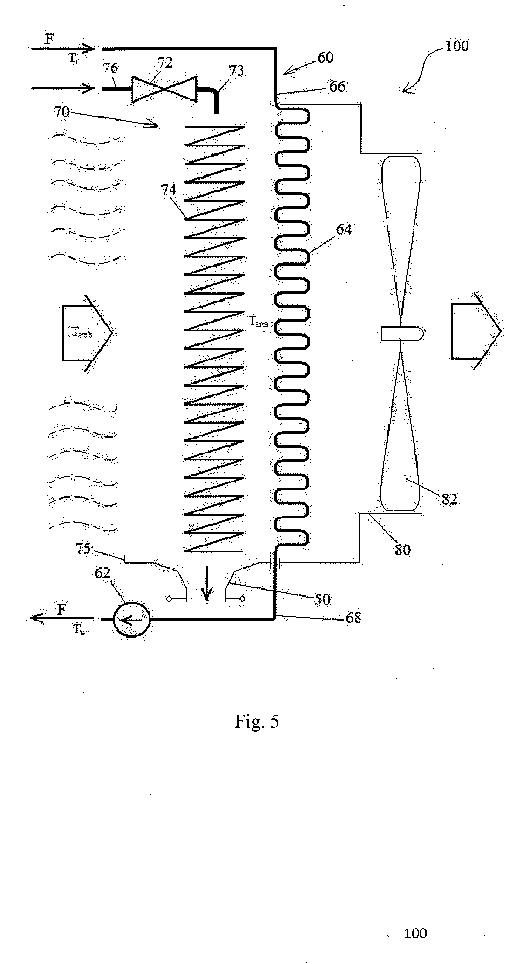

In a first illustrative application shown in Fig. 5, the device 50 of the present invention may be used in a cooling plant 100 for process fluids. The plant comprises a process fluid circuit 60, a circuit 70 of the fluid thermal carrier (water) and an air circuit 80, all contained in a closed support structure. Circuit 60 is provided with a pumping group 62 allowing circulation of the process fluid F through a heat exchanger 64: more particularly fluid F enters the heat exchanger 64 from a duct 66 at a temperature Tᵢ and goes out through a duct 68 at a temperature Tᵤ lower than Tᵢ. In the interval of values between Tᵢ and Tᵤ the fluid F is present only in its liquid phase.

In this connection it should be pointed out that in case of an application to an evaporation condenser for refrigerating plants, fluid F enters in the gaseous state at temperature Tᵢ and comes out in the liquid state at temperature Tᵤ (lower than Tᵢ). Accordingly the pump 62 is replaced by a refrigerating compressor upstream the heat exchanger 64.

Circuit 70 of the thermal carrier fluid, preferably water, is however provided with a feeding duct 76, downstream of which there is a delivery regulating device 72 which is in turn connected to a delivery unit 73: the thermal carrier fluid is therefrom delivered to one or more evaporation panels 74 or exchange packets. These are preferably made of absorbing materials such as cardboard or any other hygroscopic material obtained with fibrous raw materials and are arranged for instance under the delivery unit 73, so that their primary dimension lyes on the vertical direction; under the packet 74 a collecting tub 75 is placed, inside which the device 50 of the present invention is mounted. Finally, circuit 80 is provided with a sucking duct, typically coincident with the structure interior and one or more fans 82.

An air stream at temperature T_{amb} is forced by the action of fan 82, to hit the evaporation panel 74, soaked with water through the regulating device 72 and the delivery until 73; water evaporation from panel 74 causes an absorption of heat from the air current, which then undergoes, downstream the panel 74, a decrease of temperature Tₐᵣᵢₐ under T_{amb}. It is well known that such a thermal difference is exploited for cooling fluid F circulating in the exchanger 64. It is therefore clear that it is necessary to keep constant the level of saturation of the evaporation panel 74, through an adequate water feed from regulator 72, in order to exploit sufficiently the adiabatic effect. On the other hand it is true that securing saturation with a water excess, generates a waste of water and a storage of liquid phase in the collection tub 75, which is the ground for proliferation of bacteria and source of diseases like legionella. The arrangement of the detection device 50 in said tub 75 therefore allows to discharge and at the same time to detect the rise of minimum storage level and to actuate, through a suitable retroaction to the regulation systems (not shown), the closure of the regulating device 72 to stop the water feed.

A cooling operation, within the limits of the regulation logic supporting the electric control and drive panels of the above described plant 100, may be started by execution of one or more of the following functions:
starting one or more fans 82 at a rotation speed between a minimum and a maximum value;
starting one or more evaporation panels 74 according to the provided modes;
starting one or more refrigerating plants, separately controlled.

Termination of a cooling operation may occur when the hydraulic pumps 62 are not operative and/or temperature Tᵢ of fluid F is such to require interruption or suspension of the cooling operation and/or other reasons arise.

Consequently the cooling operation may be terminated by execution of one or more of the following functions:
exclusion of one or more refrigerating plants, separately controlled;
exclusion of evaporation panels 74;
exclusion of fans 82.

The period comprised between a cooling operation and the subsequent one, may consist in a condition of total inactivity, during which pumps 62 are inactive, or of temporary inactivity, where the pumps 62 are operative but temperature Tᵢ of the fluid is of such a value, that a cooling operation is not required.

In a second application the device 50 of the present invention may be used in a plant 100 for cooling, heating or humidifying fluids in the gaseous condition, such as the plant illustrated as example in Fig. 6, with an operation corresponding to the description of Fig. 5.

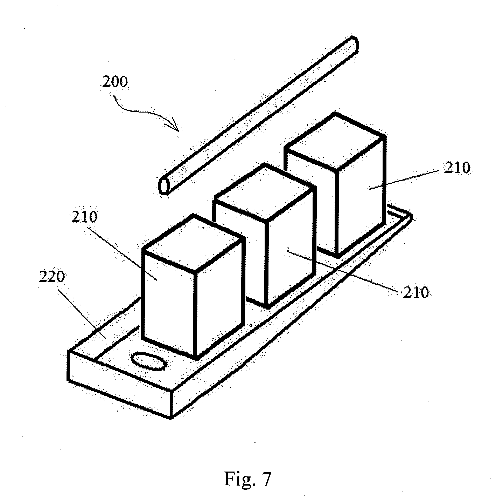

In a third illustrative application, the device 50 of the present invention may be used in a cooling plant 200 for articles in industrial processes, as shown in Fig. 7. This plant is constituted by a structure 220 containing one or more articles 210 to be cooled and one or more evaporation plants 100 controlled, as a function of the industrial process, by one or more regulation systems integrated into one or more electric control and drive panels, installed inside or outside the cooling plant, in a local or remote position. In the application in an anti-bacterial environment, the economizer device of the present invention is a sensor of presence of non evaporated water for regulation systems of evaporation plants integrated into cooling, heating or humidifying equipments having features responsive to measures against development, proliferation and ejection of harmful or lethal bacterial agents (the so-called anti-legionella regulations). From the foregoing detailed description it is clear that, with particular reference to the evaporation plants, the device of the present invention allows an immediate retroaction of the quantity of non evaporated water, a reduction of the operative costs, an undersizing of the water stock to be used for the evaporation plants, a reduction of costs for possible humidity probes, and finally a reduction of the risk of proliferation of noxious or lethal bacterial substances that may arise and develop because of excess water storage driven into the plants with circulation of forced air.

## Claims

1. A device (50) for detecting passage of a liquid comprising: an electrically non conductive main body (10) provided with a passage channel (12) for said liquid, said passage channel (12) having a narrowing portion (17); said main body (10) further including at least a pair of holes (13,15) made on opposite lateral sides relative to said passage channel (12); said device (50) further comprising two electrodes (42,44) and at least a pair of electrical conductive elements (30) arranged on opposite sides relative to said narrowing portion (17) and arranged to be inserted in the channel such that through holes (33, 35) in said electrical conductive elements are aligned with the holes (13, 15) of the main body, and each conductive element (30) having a passage (32) for said liquid; said device (50) being **characterized in that** it is positioned with vertical central axis (X) and perpendicular to the ground, and said holes (13,15) are positioned at different heights relative to the vertical axis (X) of the device (50), said electrodes (42,44) being inserted into said holes (13,15) of the main body and into said holes (33,35) of the conductive elements, such that they are fully buried in the device body, and said electrically conductive elements (30) having a conical portion (36), converging to a cylindrical circular portion (34) and each electrically conducting element (30) being positioned at a reciprocal distance in the range of 5 mm to 15 mm determined by the thickness of the narrowing portion (17) to detect at least the presence of a minimum level of detectable water flowing through said vertically installed device (50) descending by gravity along the conical portion (36) of the upper conductive element (30), that causing an acceleration allowing the minimum level of water to contact the circular portion (34) of the lower conductive element (30) so creating an electric continuity and the consequent circulation of a current between the two conductive elements.

2. The device (50) of claim 1, wherein said device (50) is adapted for use outdoors.

3. The device (50) of claim 1, wherein said electrodes (42,44) are positioned at different heights relative to ground.

4. The device (50) of claim 1, wherein said electrodes (42,44) are electrically connected and activated in presence of a flow of liquid drops with the distance between the electrodes.

5. The device (50) of claim 1, wherein said electrodes (42,44) are activated only by the passage of fluid inside the device (50).

6. The device (50) of claim 1, wherein said main body (10) is made as an enbloc mould or divided into pieces.

7. The device (50) of claim 1, wherein said conductive elements (30) are arranged by interference fit in the passage channel (12) of said main body (10) at opposite sides relative to said narrowing portion (17), with their conical portions (36) pointing to the inlet (14) and outlet (16) portions, respectively, for the liquid in said channel (12).

8. The device (50) of claim 1, wherein said main body (10) further comprises a mounting flange (11) and the outlet portion may be connected to a drain duct.

9. A cooling system (100) for fluids comprising a circuit (60) for the fluid to be cooled, provided with a pumping unit (62), at least a heat exchanger (64) and a circuit (70) for the thermal carrier fluid, provided with at least a delivery regulator (72) for said thermal carrier fluid, for feeding at least an absorption element (74) with said fluid, at least one member (75) to collect said thermal carrier fluid, a control system of said regulator (72), a circulation system (80) for a second thermal carrier fluid, wherein said second thermal carrier fluid contacts said absorption element (74) and said heat exchanger (64), **characterized in that** the cooling system further comprises a detection device (50) according to the preceding claims and said collection member (75) is arranged to discharge said thermal carrier fluid through said detection device (50) and the control system is arranged to act on said delivery regulator (72) on the basis of a signal (I) received from said detection device (50).

10. The system (100) of claim 9, wherein said system may have different dimensions and configurations.

11. The system (100) of claim 10, wherein said system is used in evaporation condensers of refrigerating equipments and said pumping unit (62) is replaced by a compression unit.

## Patentansprüche

1. Meldevorrichtung (50) des Durchflusses einer Flüssigkeit, enthaltend: einen nichtleitenden Hauptkörper (10) mit einem Kanal (12) für die durchflussende Flüssigkeit, der ein verengertes Teil (17) aufweist; der Hauptkörper (10) weiter enthält mindestens ein Paar Löcher (13, 15) auf den gegenüberliegenden Seiten des Kanals (12); diese Vorrichtung (50) weiter enthält zwei Elektroden (42, 44) und mindestens ein Paar leitende Elemente (30), die an entsprechenden gegenüberliegenden Seiten des verengerten Teils (17) und im Kanal so angeordnet sind, dass sich Durchgangslöcher (33, 35) in den besagten leitenden Elementen mit den Löchern (13, 15) des Hauptkörpers (10) aufreihen, und jedes leitende Element (30) eine Durchfluss (32) für die Flüssigkeit hat; diese Vorrichtung (50) ist **dadurch gekennzeichnet, dass** sie eine auch zum Erdboden senkrechte Mittelachse (X) aufweist und die Löcher (13, 15) an verschiedenen Höhen bezüglich der senkrechten Achse (X) der Vorrichtung (50) angeordnet sind, worin die Elektroden (42, 44) in die Löcher (13, 15) des Hauptkörpers (10) und in die Löcher (33, 35) der leitenden Elemente (30) so eingeführt werden, dass sie völlig in das Hauptkörper versenkt werden; und die leitenden Elemente (30 haben einen kegeligen Teil (36), der in einem zylindrischen runden Teil (34) zusammenlaüft, und jedes leitendes Element (30) mit einem gegenseitigen, nach der Stärke des verengerten Teils (17) bestimmten Abstand im Bereich von 5 mm - 15 mm angeordnet wird, um mindestens die Anwesenheit eines Niedrigwasserstands zu ermitteln, der durch die besagte senkrecht eingebaute Vorrichtung (50) fliesst und entlang dem kegeligen Teil (36) des oberen leitenden Elementes (30) wegen der Schwerkraft abwärts fliesst, so dass eine Beschleunigung entsteht und gestattet dem Niedrigwasserstand, den runden Teil (34) des unteren leitenden Elements (30) zu erreichen und einen elektrischen Durchgang zu erhalten, mit dem herrührenden Stromumlauf zwischen den beiden leitenden Elementen.

2. Vorrichtung (50) nach Anspruch 1, worin die Vorrichtung (50) für den Gebrauch im Freien geeignet ist.

3. Vorrichtung (50) nach Anspruch 1, worin die Elektroden (42, 44) an zum Erdboden verschiedenen Höhen angeordnet sind.

4. Vorrichtung (50) nach Anspruch 1, worin die Elektroden (42, 44) angeschlossen und gesteuert werde, als ein Strom von Tropfen der Flüssigkeit im Elektrodenabstand vorhanden ist.

5. Vorrichtung (50) nach Anspruch 1, worin die Elektroden (42, 44) nur von der innerhalb der Vorrichtung (50) durchfliessenden Flüssigkeit aktiviert werden.

6. Vorrichtung (50) nach Anspruch 1, worin der Hauptkörper (10) aus einem Einzelteil bzw. aus mehreren Stücken besteht.

7. Vorrichtung (50) nach Anspruch 1, worin die leitenden Elemente (30) im Durchflusskanal (12) des Hauptkörpers (10) an den gegenüberliegenden Seiten des verengerten Teils (17) mit Übermass angeordnet sind, und ihre kegeligen Teile (36) zum Einlass (14) bzw. Auslass (16) der Flüssigkeit im Kanal (12) gerichtet sind.

8. Vorrichtung (50) nach Anspruch 1, worin der Hauptkörper (10) einen Ansatzflansch (11) weiter enthält und der Auslass mit einem Abflussrohr verbunden werden kann.

9. Kühlsystem (100) für Flüssigkeiten, enthaltend einen Kreislauf (60) für die zu kühlende Flüssigkeit, worin der Kreislauf einen Pumpenstand (62), mindestens einen Wärmetauscher (64) und einen Kreislauf (70) für den Wärmeüberträger aufweist, wo der Kreislauf (70) einen Durchflussregler (72) für den Wärmeüberträger, der mindesten einen Flüssigkeitsabsorber (74) mit der Flüssigkeit versorgt, mindestens einen Sammlungsteil (75) für den Wärmeüberträger, ein Steuersystem für den Durchflussregler (72), ein Zirkulationssystem (80) für einen zweiten Wärmeüberträger enthält, worin der besagte zweite Wärmeüberträger den Flussigkeitsabsorber (74) und den Wärmetauscher (64) verbindet, **dadurch gekennzeichnet, dass** der Kühlsystem eine Meldevorrichtung (50) nach den vorhergehenden Ansprüchen weiter enthält, und der besagte Sammlungsteil (75) geeignet ist, um den Wärmeüberträger durch die besagte Meldevorrichtung (50) abzulassen, und das Steuersystem geeignet ist, um den Durchflussregler (72) auf der Grundlage von einem aus der Meldevorrichtung (50) erhaltenen Signal (I) zu steuern.

10. System (100) nach Anspruch 9, worin dieses System verschiedene Dimensionen und Konfigurationen aufweisen kann.

11. System (100) nach Anspruch 10, worin das System für Verdunstungsverflüssiger von Kühlanlagen, und der genannte Pumpenstand (62) durch eine Verdichtungsanlage ersetzt wird.

## Revendications

1. Dispositif (50) détecteur de passage de liquide comprenant : un corps principal (10) non conductible, muni d'un canal de passage (12) pour ledit liquide, ledit canal de passage (12) ayant une partie rétrécissante (17) ; ledit corps principal (10) comprenant aussi au moins une paire des trous (13, 15) prévus sur les côtés latéraux par rapport au canal de passage (12) ; ledit dispositif (50) comprenant aussi deux électrodes (42, 44) et au moins une paire d'éléments électriques conductibles (30) disposés sur les côtés opposés à la partie rétrécissante (17), et insérés dans le canal, en sorte que des trous passants (33, 35) dans les éléments électriques conductibles sont alignés avec les trous (13, 15) du corps principal, et chaque élément conductible (30) a un passage (32) pour le liquide ; ledit dispositif (50) étant **caractérisé en ce qu'**il est positionné avec l'axe (X) central vertical et perpendiculaire au terrain, et lesdits trous (13, 15) sont positionnés aux hauteurs différentes de l'axe vertical (X) du dispositif (50), lesdits électrodes (42, 44) étant insérés dans lesdits trous (13, 15) du corps principal ainsi que dans lesdits trous (33, 35) des éléments conductibles, de sorte qu'ils sont totalement noyés dans le corps principal, et lesdits éléments électriques conductibles (30) ont une partie conique (36) convergeant dans une partie circulaire cylindrique (34), et chaque élément électrique conductible (30) étant positionné à une distance réciproque dans la gamme de 5 à 15 mm, déterminée par l'épaisseur de la partie rétrécissante (17), pour détecter au moins la présence d'un niveau minimum d'eau détectable s'écoulant par ledit dispositif (50) positionné verticalement, descendant par gravité le long de la partie conique (36) de l'élément conductible supérieur (30), en produisant une accélération, permettant au niveau minimum d'eau de contacter la partie circulaire (34) de l'élément conductible inférieure (30) et produire une continuité électrique et la circulation conséquente d'un courant entre les deux éléments conductibles.

2. Dispositif (50) de la revendication 1, dont ledit dispositif (50) est apte à l'usage en plein air.

3. Dispositif (50) de la revendication 1, dont lesdits électrodes (42,44) sont positionnés à hauteurs différentes par rapport au terrain.

4. Dispositif (50) de la revendication 1, dont lesdits électrodes (42, 44) sont connectés et activés électriquement en présence d'un écoulement des gouttes de liquide dans la distance entre les électrodes.

5. Dispositif (50) de la revendication 1, dont lesdits électrodes (42, 44) sont activés seulement par le passage du liquide à l'intérieur du dispositif (50).

6. Dispositif (50) de la revendication 1, dont ledit corps principal (10) est fabriqué comme monobloc ou divisé en parties.

7. Dispositif (50) de la revendication 1, dont lesdits éléments conductibles (30) sont disposés par interférence dans le canal de passage (12) du corps principal (10) aux côtés opposés à ladite partie rétrécissante (17), avec les parties coniques (36) pointées respectivement vers les parties d'entrée (14) et de sortie (16) pour le liquide dans ledit canal (12).

8. Dispositif (50) de la revendication 1, dont ledit corps principal (10) comprend aussi une bride de montage (11), et la partie de sortie (16) peut être connectée à un conduit de vidange.

9. Système (100) de refroidissement pour fluides, comprenant un circuit (60) pour le fluide à refroidir, muni d'une unité de pompage (62), au moins un échangeur de chaleur (64) et un circuit (70) pour le fluide caloporteur, ayant au moins un contrôleur de débit (72) pour ledit fluide caloporteur, pour alimenter au moins un élément d'absorption (74) pour ledit fluide, au moins un organe (75) pour recueillir ledit fluide caloporteur, un système de contrôle du dit contrôleur (72), un système de circulation (80) pour un deuxième fluide caloporteur, dont ledit deuxième fluide caloporteur contacte ledit élément d'absorption (74) et ledit échangeur de chaleur (64), **caractérisé en ce que** le système de refroidissement comprend aussi un dispositif détécteur (50) selon les revendications précédentes, et ledit organe de recueil (75) est apte pour décharger ledit fluide caloporteur par ledit dispositif détécteur (50), et le système de contrôle est apte pour régler ledit contrôleur de débit (72) selon un signal (I) reçu par ledit dispositif détécteur (50).

10. Système (100) selon la revendication 9, dont ledit système peut avoir dimensions et configurations diverses.

11. Système (100) selon la revendication 10, dont ledit système est utilisé pour condensateurs d'évaporation des installations de refroidissement, et ladite unité de pompage (62) est remplacée par une unité de compression.
